# EUROPÄISCHE PATENTANMELDUNG

(11) **EP 4 834 553 A1**
(43) Veröffentlichungstag der Anmeldung: **04.11.2026**
(21) Anmeldenummer: 26175066.5
(22) Anmeldetag: 28.04.2026
(51) Int. Cl.: B27C 9/00, B23Q 1/00

(54) **BEARBEITUNGSVORRICHTUNG MIT BEARBEITUNGSEINHEIT**

(30) Priorität: 30.04.2025 DE 102025116659
(71) Anmelder: HOMAG GmbH, 72296 Schopfloch (DE)
(72) Erfinder: Calmbach, Martin, 72293 Glatten (DE); Matt, Marco, 72250 Wittlensweiler (DE)
(74) Vertreter: Hoffmann Eitle

(57) **Zusammenfassung**

Die Erfindung betrifft eine Bearbeitungsvorrichtung zum Bearbeiten von bevorzugt dreidimensional geformten Werkstücken, die bevorzugt zumindest abschnittsweise aus Holz, aus Kunststoff oder dergleichen bestehen. Die Bearbeitungsvorrichtung weist eine Bearbeitungseinheit auf, die eine Schnittstelle zum Einwechseln von Bearbeitungswerkzeugen und/oder Bearbeitungsaggregaten hat, wobei die Schnittstelle auch konfiguriert ist, Energie und/oder Daten zu übertragen.

## Beschreibung

### Technisches Gebiet

Die Erfindung betrifft eine Bearbeitungsvorrichtung mit einer Bearbeitungseinheit, die zur Bearbeitung von bevorzugt dreidimensional geformten Werkstücken, insbesondere aus Holz bzw. Kunststoff, eingesetzt werden kann.

### Stand der Technik

Bei der Bearbeitung von Werkstücken, insbesondere für die Möbelindustrie, werden oft richtungsorientierte Bearbeitungsvorrichtungen verwendet. Diese erfordern in der Regel eine bestimmte Winkellageorientierungen zur Oberfläche bzw. Kante des Werkstücks, um optimale Bearbeitungsergebnisse zu erzielen.

Die EP 2 420 347 B1 offenbart eine Bearbeitungsvorrichtung, mit wenigstens einer ersten Drehachse, mittels der ein erster Abschnitt der Bearbeitungsvorrichtung drehbar an einer Basisabschnitt angebracht ist, und einer zweiten Drehachse, mittels der ein zweiter Abschnitt der Bearbeitungsvorrichtung drehbar am ersten Abschnitt angebracht ist. Zudem weist die Bearbeitungsvorrichtung ein Bearbeitungsaggregat auf, das mittels einer Bearbeitungsaggregatachse drehbar am zweiten Abschnitt angebracht ist und das wenigstens ein, bevorzugt um eine Bearbeitungsachse drehbares, Bearbeitungsmittel aufweist. Die Bearbeitungsvorrichtung hat ferner einen Antrieb für die Bearbeitungsaggregatachse, der am ersten Abschnitt und/oder am zweiten Abschnitt und/oder am Basisabschnitt angeordnet ist.

Die EP 1 640 112 B1 offenbart ein mehrachsen-Bearbeitungskopf, der ein um eine erste Achse drehbares Spindelgehäuse mit einer Motorspindel hat, die eine an der freien Stirnseite des Spindelgehäuses liegende Aufnahme für Bearbeitungswerkzeug oder -aggregate aufweist. Zur Erhöhung der Funktionalität des Bearbeitungskopfes ist das Spindelgehäuse an einem um die erste Achse drehbaren Schwenkkopf angeordnet und daran um eine zweite Achse schwenkbar, die winklig zu der ersten Achse steht. Zudem weist das Spindelgehäuse eine Schnittstellenebene an einer Stirnseite auf.

Die EP 2 332 718 B1 offenbart ein Bearbeitungszentrum zum Bearbeiten von plattenförmigen Werkstücken, mit einem einwechselbaren und an einem 5-Achs-Bearbeitungskopf anbringbaren Anleimaggregat zum Anleimen eines Kantenmaterials an eine Schmalfläche des plattenförmigen Werkstücks.

### Darstellung der Erfindung

Der Erfindung liegt die Aufgabe zugrunde, eine Bearbeitungsvorrichtung bereitzustellen, die Werkstücke schnell, effizient und präzise in mehreren Richtungen bearbeiten kann.

Eine erfindungsgemäße Bearbeitungsvorrichtung ist in Anspruch 1 definiert. Die Unteransprüche beziehen sich auf bestimmte Ausführungsformen.

Die erfindungsgemäße Bearbeitungsvorrichtung zum Bearbeiten von bevorzugt dreidimensional geformten Werkstücken, die bevorzugt zumindest abschnittsweise aus Holz, aus Kunststoff oder dergleichen bestehen, weist eine Bearbeitungseinheit auf. Die Bearbeitungseinheit hat eine Schnittstelle zum Einwechseln von Bearbeitungswerkzeugen und/oder Bearbeitungsaggregaten, wobei die Schnittstelle auch konfiguriert ist, Energie und/oder Daten zu übertragen.

Ein Vorteil der erfindungsgemäßen Bearbeitungsvorrichtung ist, dass durch die Schnittstelle der Bearbeitungseinheit Bearbeitungswerkzeuge bzw. Bearbeitungsaggregate schnell eingewechselt werden können. Dadurch kann die Zeit verkürzt werden, in der die Fertigung für den Werkzeugwechsel unterbrochen werden muss.

Zudem können, wenn die Schnittstelle der Bearbeitungseinheit konfiguriert ist, Energie zu übertragen, die Bearbeitungswerkzeuge bzw. Bearbeitungsaggregate direkt über die Schnittstelle mit Energie versorgt werden, ohne dass zusätzliche Anschlüsse und/oder Leitungen und/oder Akku erforderlich sind. Auf diese Weise kann die Anzahl der Komponenten reduziert und das System kompakter gestaltet werden.

Darüber hinaus können, wenn die Schnittstelle konfiguriert ist Daten zu übertragen, Informationen zwischen einem Steuerungssystem der Bearbeitungsvorrichtung und dem Bearbeitungswerkzeugs bzw. Bearbeitungsaggregats ausgetauscht werden. Dadurch kann eine Funktionserweiterung erreicht werden, wie z.B. eine automatische Verstellung, und daher eine höhere Präzision der Bearbeitungsoperationen erzielt werden.

In einer Ausführungsform kann die Bearbeitungseinheit ein 4-Achs-Bearbeitungskopf, und bevorzugt ein 5-Achs-Bearbeitungskopf sein.

Dadurch können die Freiheitsgrade der Bearbeitungseinheit erhöht werden.

In einer Ausführungsform kann die Bearbeitungsvorrichtung mindestens ein Bearbeitungswerkzeug und/oder mindestens ein Bearbeitungsaggregat umfassen und die Bearbeitungseinheit kann ein Bussystem aufweisen, das so konfiguriert ist, dass die Datenübertragung von einer Bearbeitungsvorrichtungssteuerung zum Bearbeitungswerkzeug bzw. Bearbeitungsaggregat und umgekehrt stattfinden und über die Schnittstelle laufen kann.

Dadurch kann die Anzahl der benötigten Anschlüsse und/oder Datenleitungen weiter reduziert werden. Außerdem können Bearbeitungswerkzeuge bzw. Bearbeitungsaggregate als Busteilnehmer leichter von der Schnittstelle der Bearbeitungseinheit entfernt und ausgetauscht werden. Ferner können Daten unterschiedlichster Art und Umfang in einem digitalen Format über die Schnittstelle übertragen werden und sind somit für einen Busteilnehmer leicht decodierbar. Durch die digitale Datenübertragung können zudem Übertragungsfehler einfach und schnell erkannt und korrigiert werden.

In einer Ausführungsform kann das Bearbeitungswerkzeug oder Bearbeitungsaggregat mindestens einen Sensor aufweisen, der konfiguriert ist, um Daten über die Betriebsbedingungen des Bearbeitungswerkzeugs oder Bearbeitungsaggregats zu erfassen. Zudem kann die Schnittstelle so konfiguriert werden, dass sie die erfassten Daten über das Bussystem in Echtzeit an eine Steuerung der Bearbeitungsvorrichtung überträgt. Das Bussystem kann bevorzugt in Echtzeit Online-Werte taktzyklisch übertragen und auf zurückgelieferte Werte reagieren.

Ein Vorteil dieser Ausführungsform ist, dass eine Steuerung der Bearbeitungsvorrichtung Informationen über die Betriebsparameter des Bearbeitungswerkzeugs oder Bearbeitungsaggregats in Echtzeit erhält. Dementsprechend können die Bearbeitungsvorgänge der Bearbeitungseinheit an die in Echtzeit ermittelten Betriebsparameter (wie beispielsweise Aggregatenkennung, Werkzeugkennung, Zustandsdaten, Laufzeiten, Einstellparameter, u.s.w.) angepasst werden. Das bedeutet, dass beispielsweise der Vorschub und/oder die Drehzahl der Bearbeitungseinheit beim Auftreten eines bestimmten Ereignisses reduziert werden können. Darüber hinaus können auch die Bearbeitungsvorgänge des Bearbeitungswerkzeugs oder Bearbeitungsaggregats an die in Echtzeit ermittelten Betriebsparameter angepasst werden. So kann beispielsweise der Bearbeitungswinkel für Schrägschnitte mit ziehendem Schnitt in Echtzeit angepasst werden, um eine höhere Bearbeitungspräzision zu erreichen. Außerdem kann zum Beispiel der Vorschub des Bearbeitungswerkzeugs oder Bearbeitungsaggregats in Echtzeit angepasst werden, um eine mechanische Überlastung bzw. Überhitzung zu vermeiden. Auf diese Weise kann die Lebensdauer des Bearbeitungswerkzeugs oder Bearbeitungsaggregats erhöht und die Wartungskosten reduziert werden.

In einer Ausführungsform kann das Bussystem so konfiguriert werden, dass es mindestens teilweise Daten über ein Feldbus wie beispielsweise I/O-Link, EtherCat, CAN, Modbus, Profinet bzw. Profibus überträgt, wobei EtherCat und/oder IO-Link bevorzugt sind.

Ein Vorteil der Datenübertragung über EtherCat ist die Möglichkeit, hohe Übertragungsraten zu erreichen. Es können zudem geringere Latenzzeiten erreicht werden. Darüber hinaus ermöglicht EtherCat eine große Netzwerkkapazität und ist leicht mit anderen Systemen zu integrieren. Darüber hinaus kann die Anzahl der benötigten Verbindungen bzw. Datenleitungen weiter reduziert werden.

Ein Vorteil der Datenübertragung über IO-Link ist, dass Sensoren schneller und einfacher als bei anderen Bussystemen aus dem Netz entfernt und hinzugefügt werden können. Das kann Stillstandszeiten und Wartungskosten reduzieren. Darüber hinaus ermöglicht IO-Link eine transparente Visualisierung der an IO-Link angeschlossenen Geräte. Das macht die Fehlerdiagnose bei Geräten, die an IO-Link angeschlossen sind, einfacher und schneller als bei anderen Bussystemen.

In einer Ausführungsform kann das Bussystem mindestens eine Plug-in-Funktion aufweisen, wobei, falls EtherCat als Feldbus verwendet wird, mindestens eine Plug-in-Funktion eine HotPlug Funktion ist.

Durch eine Plug-in-Funktion können Geräte, wie z.B. Bearbeitungswerkzeuge, Bearbeitungsaggregate, Sensoren u.s.w., einfacher und schneller aus dem Netzwerk entfernt bzw. dem Netzwerk hinzugefügt werden.

In einer Ausführungsform kann das Bearbeitungswerkzeug oder Bearbeitungsaggregat einen Datenspeicher aufweisen, in welchem die Daten gespeichert werden, die von den Sensoren des Bearbeitungswerkzeugs oder Bearbeitungsaggregats erfasst wurden. Ferner kann das Bussystem so konfiguriert werden, dass es einem Steuerungssystem der Bearbeitungseinheit ermöglicht die Daten in dem Datenspeicher aufzurufen und/oder zu schreiben.

Auf diese Weise können gespeicherten Daten im Bearbeitungswerkzeugs oder Bearbeitungsaggregat beibehalten, mit dem Bearbeitungswerkzeugs oder Bearbeitungsaggregat transportiert und in der Zukunft ausgelesen werden. Zudem kann das Steuerungssystem der Bearbeitungseinheit historische Daten, die in einem Bearbeitungswerkzeug bzw. Bearbeitungsaggregat gespeichert sind, lesen, ändern und/oder analysieren.

In einer Ausführungsform kann die Schnittstelle mindestens teilweise so konfiguriert werden, dass sie Daten drahtlos, bevorzugt über Bluetooth, überträgt.

Auf diese Weise kann die Anzahl der Hardwarekomponente reduziert werden.

In einer Ausführungsform kann die Bearbeitungseinheit eine elektrische Steckerschnittstelle aufweisen, die drehbar mit einer ersten Achse und bevorzugt an einer Spindelstirnseite der Bearbeitungseinheit ist, wobei die Steckerschnittstelle so konfiguriert werden kann, dass sie Daten zwischen einem Steuerungssystem des Bearbeitungswerkzeugs oder Bearbeitungsaggregats und dem Steuerungssystem der Bearbeitungseinheit über das Bussystem überträgt.

Ein Vorteil der elektrischen Steckerschnittstelle ist, dass die Verkabelung für die Strom- und Datenübertragung zwischen der Bearbeitungseinheit und dem Bearbeitungswerkzeug oder Bearbeitungsaggregat eliminiert werden kann.

Da die Steckerschnittstelle zudem mit einer ersten Achse der Bearbeitungseinheit drehbar ist, kann das am Steckerschnittstelle angeschlossenes Bearbeitungswerkzeug oder Bearbeitungsaggregat als Ganzes mit der Steckerschnittstelle bewegt werden. Dadurch kann eine lokale Unterbrechung der Verbindung zwischen der Steckerschnittstelle und dem Bearbeitungswerkzeug oder Bearbeitungsaggregat verhindert werden. Außerdem kann die Schnittstelle, und damit das Bearbeitungswerkzeug oder Bearbeitungsaggregat, flexibel und schnell durch die Bearbeitungseinheit positioniert und bewegt werden.

Wird die Steckerschnittstelle an einer Spindelstirnseite der Bearbeitungseinheit platziert, ist es ferner möglich, größere Bearbeitungswerkzeuge oder Bearbeitungsaggregate mit der Steckerschnittstelle zu verbinden und/oder Werkstücke mit Innenradien, and denen der Stecker ansteht, zu bearbeiten.

In einer Ausführungsform kann die Bearbeitungseinheit mindestens eine RS485 Schnittstelle bevorzugt mit Teachfunktion und/oder mindestens eine Schnittstelle für einen optischen Abstandssensor und/oder mindestens eine Schnittstelle zum Ansteuern eines Ultraschallwerkzeugs, bevorzugt eine Ultraschallsonotrode, noch mehr bevorzugt ein Ultraschallmesser, aufweisen.

Ein Vorteil der RS485 Schnittstelle ist, dass sie hohe Störfestigkeit gegenüber Gleichtaktstörungen aufweist.

Wenn die RS485 Schnittstelle über eine Teachfunktion verfügt, kann ein an die RS485 Schnittstelle angeschlossener Sensor einen zukünftigen Einstellwert auf der Grundlage der in der Vergangenheit aufgezeichneten Werte berechnen und speichern.

Ein Vorteil der Schnittstelle für einen optischen Abstandssensor ist, dass das Werkstück vor und/oder während der Bearbeitung eines Werkstücks dreidimensional und berührungslos vermessen werden kann. Dadurch können Bearbeitungsparameter während der Bearbeitung dynamisch angepasst werden.

Ein Vorteil der Schnittstelle zum Ansteuern eines Ultraschallwerkzeugs ist, dass dadurch zumindest ein Ultraschallwerkzeug (bevorzugt eine Ultraschallsonotrode) eingewechselt werden kann und damit auch weiche Werkstoffe (wie beispielsweise Dämmstoffe, Textilien und Kunststoffe) und Wabenplatten präzise, effizient und sauber (d.h. beispielsweise ohne Staub und Späne) bearbeitet werden können. Insbesondere können beispielsweise Kunststoffdübel in einem Werkstück mit dem Ultraschallsonotrode verschweißt werden.

Ein weiterer Vorteil der Schnittstelle zum Ansteuern eines Ultraschallwerkzeugs ist, dass dadurch zumindest ein Ultraschallmesser eingewechselt werden kann und damit auch weiche Werkstoffe (wie beispielsweise Dämmstoffe, Textilien und Kunststoffe) und Wabenplatten, die mit Fräsbearbeitung schwer zu bearbeiten sind, effizient und ohne Staub und Späne geschnitten werden können, ohne dass es zu Verformungen oder Ausfransungen kommt. Insbesondere können mit dem Ultraschallmesser beispielsweise Wabenplatten geschnitten werden.

In einer Ausführungsform kann die Bearbeitungseinheit mindestens einem gesteuerten pneumatischen Anschluss aufweisen, der bevorzugt mit der Steckerschnittstelle an der Spindelstirnseite der Bearbeitungseinheit angeordnet werden kann und bevorzugt durch einen bzw. mehrere Aggregatstützbolzen ein Bearbeitungsaggregat mit gesteuerter Druckluft versorgen kann.

Dadurch kann das Bearbeitungswerkzeug bzw. Bearbeitungsaggregat mit Druckluft und einer Minimalmengenschmierung versorgt werden.

Wird der pneumatische Anschluss an der Spindelstirnseite mit der Steckerschnittstelle angeordnet, ergibt sich ein kompaktes und modulares System.

Zusätzlich kann die Bearbeitungseinheit eine innere Druckluftzuführung durch die Spindelwelle aufweisen, womit sowohl Bearbeitungswerkzeuge mit einer gesteuerten Druckluft versorgt werden können, als auch Bearbeitungsaggregate mit einer weiteren Druckluftzufuhr direkt durch eine Hohlschaftkegel-Schnittstelle (HSK-Schnittstelle) versorgt werden können.

In einer Ausführungsform kann die Bearbeitungseinheit einen Drehverteiler, eine Zugstange und eine Werkzeugaufnahme aufweisen, die so konfiguriert sind, dass Druckluft über den Drehverteiler durch die Zugstange zu der Werkaufnahme geführt werden kann, um ein Bearbeitungswerkzeug oder ein Bearbeitungsaggregat zu versorgen. Bevorzugt ist die Werkzeugaufnahme eine Hohlschaftkegel-Werkzeugaufnahme.

Dadurch kann die Druckluft vorteilhaft zum Beispiel zur Kühlung und/oder zur Spanabfuhr verwendet werden.

In einer Ausführungsform kann die Bearbeitungseinheit kardanisch sein.

Eine Bearbeitungseinheit ist kardanisch, wenn sie 2 Drehachsen aufweist, die nicht orthogonal zueinander sind. Dadurch kann weniger Bauraum erfordert und mehr Bewegungsfreiraum angeboten werden, im Vergleich zu kartesischen Achsköpfen.

In einer Ausführungsform kann eine Frässpindel der Bearbeitungseinheit einen synchronen Elektromotor aufweisen.

Dadurch können eine hohe Leistungsdichte und ein hohes Drehmoment erreicht werden.

In einer Ausführungsform kann eine Frässpindel der Bearbeitungseinheit eine Stellachse oder Bahnachse mit Lageregelung für das Bearbeitungswerkzeug oder Bearbeitungsaggregat aufweisen, um die Funktion einer zusätzlichen Achse zu ermöglichen.

Dadurch kann mindestens ein zusätzlicher Freiheitsgrad für die Bewegungen des Bearbeitungswerkzeugs oder Bearbeitungsaggregats geschaffen und die Funktionen des Bearbeitungswerkzeugs oder Bearbeitungsaggregats können erweitert werden.

### Kurze Beschreibung der Zeichnungen

Weitere Merkmale und Vorteile ergeben sich aus der nachfolgenden Beschreibung von Ausführungsformen unter Bezugnahme auf die beiliegenden Zeichnungen. Von diesen Zeichnungen zeigt:
- Fig. 1: eine perspektivische Ansicht einer Ausführungsform der erfindungsgemäßen Bearbeitungsvorrichtung;
- Fig. 2: eine weitere perspektivische Ansicht der in Fig. 1 dargestellten Ausführungsform der erfindungsgemäßen Bearbeitungsvorrichtung;
- Fig. 3: eine weitere perspektivische Ansicht der in Fig. 1 dargestellten Ausführungsform der erfindungsgemäßen Bearbeitungsvorrichtung;
- Fig. 4: eine Vorderansicht der in Fig. 1 dargestellten Ausführungsform der erfindungsgemäßen Bearbeitungsvorrichtung;

### Beschreibung von Ausführungsformen

Gleiche Bezugszeichen, die in verschiedenen Figuren aufgeführt sind, benennen identische, einander entsprechende, oder funktionell ähnliche Elemente. Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

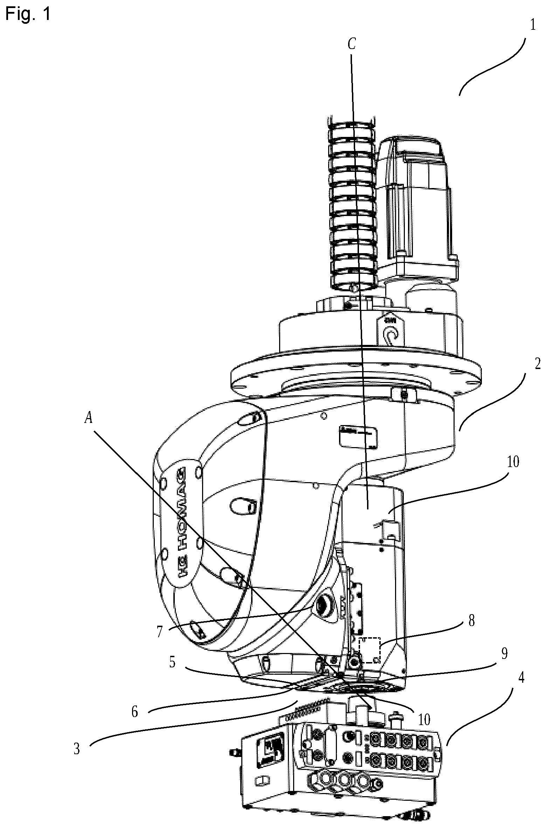

Fig. 1 zeigt eine Ausführungsform der erfindungsgemäßen Bearbeitungsvorrichtung 1. Die Bearbeitungsvorrichtung 1 in dieser Ausführungsform umfasst eine Bearbeitungseinheit 2 mit einer Schnittstelle 3 zum Einwechseln von Bearbeitungswerkzeugen und/oder Bearbeitungsaggregaten, und ein Bearbeitungsaggregat 4. Bearbeitungswerkzeuge bzw. Bearbeitungsaggregate können mit Aktoren, Sensoren und/oder Heizung ausgestattet werden.

In dieser Ausführungsform weist die Bearbeitungseinheit eine elektrische Steckerschnittstelle 5 auf, die drehbar mit einer ersten Achse C der Bearbeitungseinheit 2 ist. Die Achse C kann beispielsweise durch den Schwerpunkt der Bearbeitungseinheit 2 gehen und eine erste Achse einer kardanischen Bearbeitungseinheit sein, die wie in Fig. 1 ausgerichtet ist. Bei einer kardanischen Bearbeitungseinheit kann eine zweite Achse A z.B. wie in Fig. 1 ausgerichtet werden. Die Steckerschnittstelle 5 ist in dieser Ausführungsform an einer Spindelstirnseite 6 der Bearbeitungseinheit 2 angeordnet. Die Steckerschnittstelle kann als Plattform für weiterentwickelte, einwechselbare Aggregate mit unterschiedlichen Funktionen (wie zum Beispiel Ultraschallwerkzeuge - wie bevorzugt ein Ultraschallmesser -, Falzdruckzone, Werkstückkennzeichnung u.s.w.) verwendet werden. Bevorzugt ist, dass die Steckerschnittstelle als Plattform für mindestens ein Ultraschallmesser verwendet werden kann, der mit einer Frequenz von 20kHz und/oder 35kHz verwendet werden kann.

Die Steckerschnittstelle kann vorzugsweise die folgenden technischen Anforderungen für die elektrischen Leitung zu einem Aggregat erfüllen:
- Eine Frequenz von 20kHz und/oder 35kHz, und/oder
- eine maximale Spannung von 1000V beim Einschalten kurzzeitig, und/oder
- eine Arbeitsspannung von 500-800V wobei das System auf 4kV abgesichert wird, und/oder
- ein Spannungsverlauf in der Form eines Sinus- und/oder Rechtecksignal, und/oder
- ein maximaler Strom von 1A, und/oder
- eine Länge eines Strom-PIN von 5mm.

Außerdem weist die Bearbeitungseinheit dieser Ausführungsform eine RS485 Schnittstelle 7 mit Teachfunktion und eine Sensorschnittstelle 8 für einen optischen Abstandssensor auf.

Die Bearbeitungseinheit 2 von Fig. 1 weist auch drei pneumatische Anschlüsse 9 auf, die mit der Steckerschnittstelle 5 an der Spindelstirnseite 6 der Bearbeitungseinheit 2 angeordnet sind. Insbesondere kann ein pneumatischer Anschluss bzw. pneumatische Anschlüsse durch einen bzw. mehrere Aggregatstützbolzen mit einer inneren Druckluftzufuhr einer Spindelwelle eines Bearbeitungsaggregates angeschlossen werden, um das Bearbeitungsaggregat zu versorgen. Bevorzugt werden 3 Aggregatstützbolzen verwendet.

Zusätzlich kann über einen Drehverteiler Druckluft durch eine Zugstange zu einer Werkzeugaufnahme geführt werden, um ein Bearbeitungswerkzeug oder ein Bearbeitungsaggregat zu versorgen. Vorzugsweise ist der Drehverteiler für mindestens 24.000 U/min geeignet. Vorzugsweise ist die Werkzeugaufnahme eine Hohlschaftkegel (HSK) Werkzeugaufnahme. Noch mehr bevorzugt ist die Werkzeugaufnahme eine HSK-63-F Werkzeugaufnahme. Die Druckluftzuführung durch die Zugstange und den HSK ist besonders vorteilhaft für die Werkzeugkühlung bei der Bearbeitung von Kunststoffen und Entsorgung der Späne beim Taschenfräsen.

In Fig. 1 weist die Bearbeitungseinheit auch einen synchronen Elektromotor (nicht dargestellt), der in einer Spindel 10 integriert ist. Der synchrone Elektromotor ermöglicht beispielsweise für eine Frässpindel eine circa 20-30 % höhere Leistungsdichte als ein asynchroner Elektromotor.

Zudem zeigt Fig. 1, dass in dieser Ausführungsform die Schnittstelle 3 eine Stellachse mit Lageregelung 11 für das Bearbeitungsaggregat 4 aufweist, um die Funktion einer zusätzlichen Achse zu ermöglichen.

In dieser Ausführungsform ist die Steckerschnittstelle 5 so konfiguriert, dass sie Daten zwischen dem Steuerungssystem des Bearbeitungsaggregats 4 und dem Steuerungssystem der Bearbeitungseinheit 2 über ein Bussystem in Echtzeit übertragen kann. Das Bussystem dieser Ausführungsform weist beispielsweise einen I/O-Link Pin und vier EtherCat Pins auf. Bevorzugt ist, dass die Anzahl der EtherCat Pins höher ist als die Anzahl der I/O-Link Pins. Außerdem werden Bearbeitungswerkzeuge und/oder Bearbeitungsaggregate in dieser Ausführungsform beim Einwechseln über die sogenannte HotPlug Funktionalität der neuen Teilnehmer ins EtherCat eingebunden. Das ermöglicht die schnelle und automatische Aufnahme neuer Teilnehmer ins EtherCat ohne die Unterbrechung des Betriebs.

Vorzugsweise kann das Bussystem in Echtzeit Online-Werte taktzyklisch übertragen und auf zurückgelieferte Werte (wie z.B. eine Drehzahl) reagieren. Der Taktzyklus kann bei Ethercat Hardware- und Anforderungsspezifisch konfiguriert werden. Dabei liegt der Wert für die Taktzykluszeit bevorzugt zwischen 500µms und 2ms (einschließlich der Extreme). Noch mehr bevorzugt liegt der Wert für die Taktzykluszeit zwischen 500µms und 1ms (einschließlich der Extreme). Die Sensorik von einem eingewechselten Bearbeitungsaggregat (z.B. ein Fräsaggregat mit 60.000U/min) kann beispielsweise erkennen, dass sich die Drehzahl reduziert und kann dies über das Bussystem übermitteln. Die Steuerung kann dann durch die in Echtzeit über das Bussystem übertragenen Daten (wie z.B. Drehzahl) erkennen, dass beispielsweise die Solldrehzahl nicht erreicht wird und beispielsweise den Vorschub reduzieren. Somit kann die Solldrehzahl wieder erreicht werden.

In der Ausführungsform von Fig. 1 weist das Bearbeitungsaggregat einen Datenspeicher auf, der eine I/O-Link Platine (nicht dargestellt) ist.

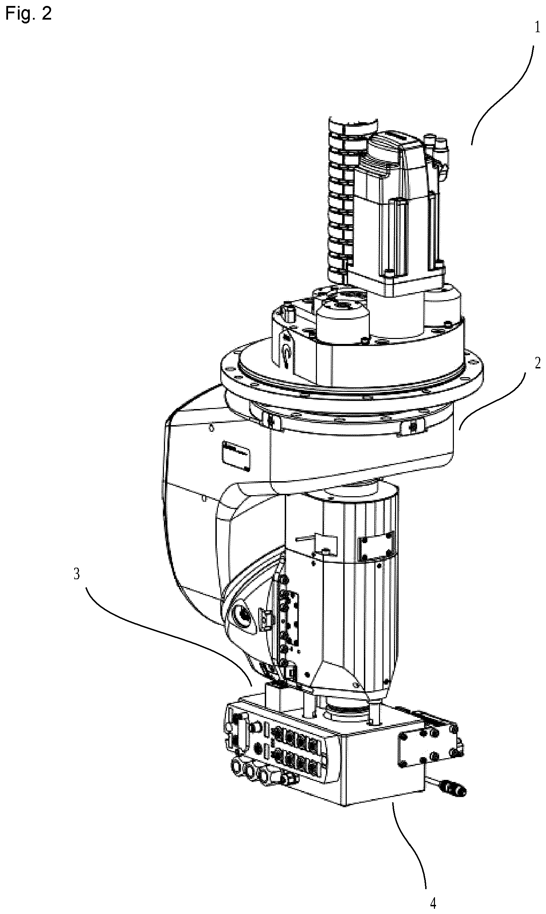

Fig. 2 zeigt dieselbe Ausführungsform wie Fig. 1, allerdings wird das Bearbeitungsaggregat 4 über die Schnittstelle 3 mit der Bearbeitungseinheit 2 verbunden.

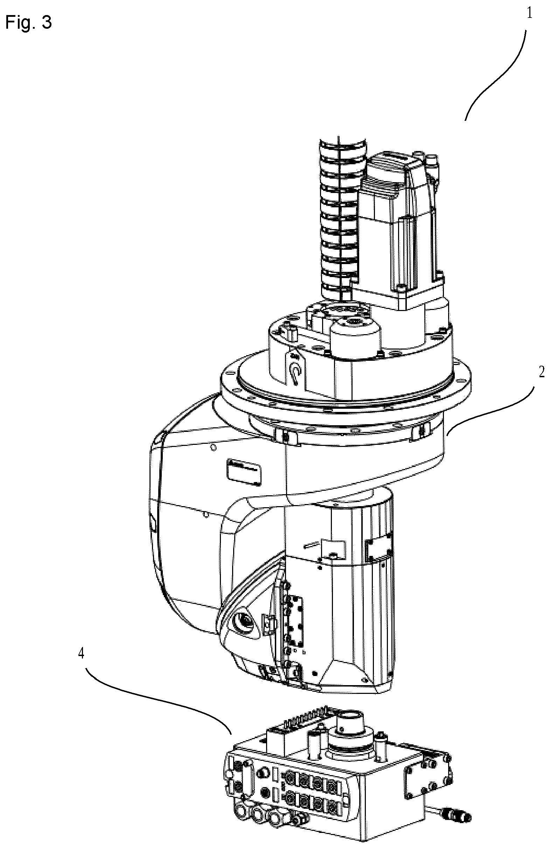

Fig. 3 ist eine weitere perspektivische Ansicht der Ausführungsform der Fig. 1.

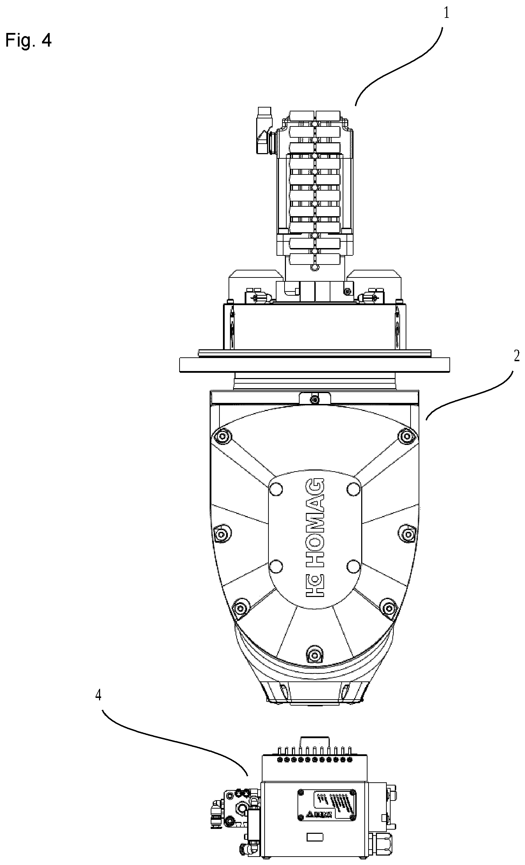

Fig. 4 ist eine Vorderansicht der Ausführungsform der Fig. 1.

### Anwendungsbeispiele

In einem ersten Anwendungsbeispiel der erfindungsgemäßen Bearbeitungsvorrichtung kann das Bearbeitungsaggregat ein einwechselbares Verleimaggregat sein. Im Verleimaggregat wird während des Verleimprozesses der Leim aufgeheizt. Wenn die Geschwindigkeit des Verleimaggregates sich ändert, kann diese Betriebsänderung in Echtzeit an ein Steuerungssystem der Bearbeitungseinheit übertragen werden. Damit kann die Bearbeitungseinheit die eigene Drehzahl anpassen und dem Heizungssystem des Verleimaggregats den Auftrag für eine Anpassung in der Heizungsrate in Echtzeit übertragen. Damit werden bessere Ergebnisse beim Verleimprozess, insbesondere von Schrägkantenverleimung, erreicht.

In einem zweiten Anwendungsbeispiel ermöglicht die Stellachse mit Lageregelung die Positionierung der Werkzeugaufnahme in einer exakten Winkelposition in Bezug zu der zu bearbeitende Stelle des Werkzeugs. Das ist möglich, weil das Bearbeitungswerkzeug bzw. Bearbeitungsaggregat Betriebsparameter durch mindestens einen Sensor aufnimmt und auf deren Basis die Bearbeitungseinheit steuert, um die Winkelposition des Bearbeitungswerkzeugs bzw. Bearbeitungsaggregats im Bezug zu der zu bearbeitende Stelle des Werkzeugs zu optimieren. Damit kann zum Beispiel die Position einer Klinge für ziehenden Schnitt und schräge Schnitte bei Dämmstoffbearbeitung während der Bearbeitung optimal angepasst werden.

### Bezugszeichenliste

- 1: Bearbeitungsvorrichtung
- 2: Bearbeitungseinheit
- 3: Schnittstelle zum Einwechseln von Bearbeitungswerkzeugen und/oder Bearbeitungsaggregaten
- 4: Bearbeitungsaggregat
- 5: elektrische Steckerschnittstelle
- 6: Spindelstirnseite
- 7: RS485 Schnittstelle
- 8: Sensorschnittstelle für einen optischen Abstandssensor
- 9: pneumatischer Anschluss
- 10: Spindel
- 11: Stellachse mit Lageregelung

## Patentansprüche

1. Bearbeitungsvorrichtung (1) zum Bearbeiten von bevorzugt dreidimensional geformten Werkstücken, die bevorzugt zumindest abschnittsweise aus Holz, aus Kunststoff oder dergleichen bestehen, mit
einer Bearbeitungseinheit (2), die eine Schnittstelle (3) zum Einwechseln von Bearbeitungswerkzeugen und/oder Bearbeitungsaggregaten (4) aufweist, wobei
die Schnittstelle (3) auch konfiguriert ist, Energie und/oder Daten zu übertragen.

2. Bearbeitungsvorrichtung (1) nach Anspruch 1, wobei die Bearbeitungseinheit ein 4-Achs-Bearbeitungskopf ist, und bevorzugt ein 5-Achs-Bearbeitungskopf ist.

3. Bearbeitungsvorrichtung (1) nach Anspruch 1 oder 2, wobei
die Bearbeitungsvorrichtung mindestens ein Bearbeitungswerkzeug und/oder mindestens ein Bearbeitungsaggregat (4) umfasst und
die Bearbeitungseinheit (2) ein Bussystem aufweist, das so konfiguriert ist, dass die Datenübertragung von einer Bearbeitungsvorrichtungssteuerung zum Bearbeitungswerkzeug bzw. Bearbeitungsaggregat und umgekehrt stattfinden und über die Schnittstelle (3) laufen kann.

4. Bearbeitungsvorrichtung (1) nach Ansprüche 1-3, wobei
das Bearbeitungswerkzeug oder Bearbeitungsaggregat (4) mindestens einen Sensor aufweist, der konfiguriert ist, um Daten über die Betriebsbedingungen des Bearbeitungswerkzeugs oder Bearbeitungsaggregats (4) zu erfassen, und
die Schnittstelle (3) konfiguriert ist, die erfassten Daten über das Bussystem in Echtzeit an eine Steuerung der Bearbeitungsvorrichtung (1) zu übertragen,
wobei das Bussystem bevorzugt in Echtzeit Online-Werte taktzyklisch übertragen und auf zurückgelieferte Werte reagieren kann.

5. Bearbeitungsvorrichtung (1) nach Anspruch 3 oder 4, wobei das Bussystem so konfiguriert ist, dass es mindestens teilweise Daten über ein Feldbus wie beispielsweise I/O-Link, EtherCat, CAN, Modbus, Profinet bzw. Profibus überträgt, wobei EtherCat und/oder IO-Link bevorzugt sind.

6. Bearbeitungsvorrichtung (1) nach Anspruch 5, wobei
das Bussystem mindestens eine Plug-in-Funktion hat, wobei,
falls EtherCat als Feldbus verwendet wird, mindestens eine Plug-in-Funktion eine HotPlug Funktion ist.

7. Bearbeitungsvorrichtung (1) nach einem der Ansprüche 4-6, wobei
das Bearbeitungswerkzeug oder Bearbeitungsaggregat (4) einen Datenspeicher aufweist, in welchem die Daten gespeichert werden, die von den Sensoren des Bearbeitungswerkzeugs oder Bearbeitungsaggregats (4) erfasst wurden, und
das Bussystem so konfiguriert ist, dass es einem Steuerungssystem der Bearbeitungseinheit (2) ermöglicht die Daten in dem Datenspeicher aufzurufen und/oder zu schreiben.

8. Bearbeitungsvorrichtung (1) nach einem der Ansprüche 1-7, wobei die Schnittstelle (3) mindestens teilweise so konfiguriert ist, dass sie Daten drahtlos, bevorzugt über Bluetooth, überträgt.

9. Bearbeitungsvorrichtung (1) nach einem der Ansprüche 1-8, wobei
die Bearbeitungseinheit (2) eine elektrische Steckerschnittstelle (5) aufweist, die drehbar mit einer ersten Achse (C) und bevorzugt an einer Spindelstirnseite (6) der Bearbeitungseinheit (2) ist,
wobei die Steckerschnittstelle (5) so konfiguriert ist, dass sie Daten zwischen einem Steuerungssystem des Bearbeitungswerkzeugs oder Bearbeitungsaggregats (4) und dem Steuerungssystem der Bearbeitungseinheit (2) über das Bussystem überträgt.

10. Bearbeitungsvorrichtung (1) nach einem der Ansprüche 1-9, wobei die Bearbeitungseinheit (2) aufweist:
mindestens eine RS485 Schnittstelle (7) bevorzugt mit Teachfunktion, und/oder
mindestens eine Schnittstelle für einen optischen Abstandssensor (8), und/oder
mindestens eine Schnittstelle zum Ansteuern eines Ultraschallwerkzeugs, bevorzugt eine Ultraschallsonotrode, noch mehr bevorzugt ein Ultraschallmesser.

11. Bearbeitungsvorrichtung (1) nach einem der Ansprüche 1-10, wobei
die Bearbeitungseinheit (2) mindestens einen gesteuerten pneumatischen Anschluss (9) aufweist, der bevorzugt mit der Steckerschnittstelle (5) an der Spindelstirnseite (6) der Bearbeitungseinheit (2) angeordnet ist, und
bevorzugt durch einen bzw. mehrere Aggregatstützbolzen ein Bearbeitungsaggregat mit gesteuerter Druckluft versorgen kann.

12. Bearbeitungsvorrichtung (1) nach einem der Ansprüche 1-11, wobei
die Bearbeitungseinheit (2) einen Drehverteiler, eine Zugstange und eine Werkzeugaufnahme aufweist, die so konfiguriert sind, dass Druckluft über den Drehverteiler durch die Zugstange zu der Werkaufnahme geführt werden kann, um ein Bearbeitungswerkzeug oder ein Bearbeitungsaggregat zu versorgen, wobei
die Werkzeugaufnahme vorzugsweise eine Hohlschaftkegel-Werkzeugaufnahme ist.

13. Bearbeitungsvorrichtung (1) nach einem der Ansprüche 1-12, wobei die Bearbeitungseinheit (2) kardanisch ist.

14. Bearbeitungsvorrichtung (1) nach einem der Ansprüche 1-13, wobei eine Frässpindel der Bearbeitungseinheit (2) einen synchronen Elektromotor aufweist.

15. Bearbeitungsvorrichtung (1) nach einem der Ansprüche 1-14, wobei eine Frässpindel der Bearbeitungseinheit eine Stellachse oder Bahnachse mit Lageregelung (11) für das Bearbeitungswerkzeug oder Bearbeitungsaggregat (4) aufweist, um die Funktion einer zusätzlichen Achse zu ermöglichen.
